# EUROPEAN PATENT SPECIFICATION

(11) **EP 1 946 979 B1**
(45) Date of publication and mention of the grant of the patent: **01.08.2012**
(21) Application number: 07381004.6
(22) Date of filing: 19.01.2007
(51) Int. Cl.: B60R 21/215

(54) **Airbag cover with controlled tear lines**
Airbag-Abdeckung mit gesteuerten Risslinien
Protection de coussin de sécurité avec lignes de pointillés contrôlées

(43) Date of publication of application: 23.07.2008
(73) Proprietor: Dalphi Metal España, S.A., 28006 Madrid (ES)
(72) Inventor: Joachim Jonietz, Andreas Maria, 36213, Vigo, Pontevedra (ES); Barandela Iglesias, Luis, 36213, Vigo, Pontevedra (ES); Pajon Fustes, Enrique, 36213, Vigo, Pontevedra (ES)
(74) Representative: Mehnert, Bernhard

(56) References cited:
- DE-B3-102004 008 726
- US-A- 5 573 267
- US-A1- 2004 108 696
- US-A1- 2005 269 804

## Description

The present invention relates to an airbag cover for automotive vehicles according to the preamble of claim 1. Such a devices is known, e.g., from US 2004/0108696 A1.

Airbag covers having an upper surface including predefined tear lines to facilitate the release of the airbag when its deployment is required to protect a vehicle occupant in the event of a collision are currently known.

It is obviously desirable for the tearing of the airbag cover to occur without any part of such cover becoming detached, and therefore said tear lines are normally designed so that the upper surface can be split into flaps joined to the cover only in areas close to its edges. These flaps must be able to rotate about said joining area, allowing the release of the airbag, and they must remain joined to the cover so as to prevent any detachment of material which may harm the vehicle occupants.

However, given that the tearing of these flaps through said tear lines may occur in very different conditions, the suitable control thereof is problematic. It must be taken into consideration that the airbag, may deploy in a very broad temperature range, e.g. between -35°C and +85°C and that within this range, the behavior of the cover, which is usually made of a plastic material, may be very different since its physical and mechanical properties considerably vary with the temperature.

Some proposals to that effect are known, and the following documents must be mentioned.

Patent document GB 2,314,305 describes an airbag cover having areas with different thicknesses defined by different tear lines.

Patent document US 5,573,267 describes an airbag cover witch reinforcement elements in areas close to the tear lines.

Patent document US 2004/0262891 describes an airbag cover in which the tear lines have areas with different thicknesses at their end part.

Patent document US 2005/0269804 describes a multi-piece airbag cover having U- or V-shaped hinge elements attached to the cover in the tear line areas.

The objective of the present invention is to provide an airbag cover with efficient control means of the tear lines designed on its outer surface so that the cover breaks in a plurality of flaps facilitating the release of the airbag at the required moment for its deployment While preventing any detachment of material for the avoidance of harm of vehicle occupants.

This objective is achieved with an airbag cover for an automotive vehicle of the above kind in an inventive manner by the characterizing features of claim 1.

Further features of the invention are subject to the subclaims.

Other advantages of the present Invention will be understood from the following detailed description of an illustrative and non-limiting embodiment of its object in relation to the attached drawings.

### DESCRIPTION OF THE FIGURES

Figure 1 shows a perspective view of the inside of an airbag cover according to the present invention.

Figures 2a and 2b are partial schematic views of an airbag cover according to the present invention while it is inactive and after it is torn due to the deployment of the airbag.

Figures 3a and 3b show partial sectional views of an airbag cover according to the present invention while it is inactive and after it is torn due to the deployment of the airbag.

### DETAILED DESCRIPTION OF THE INVENTION

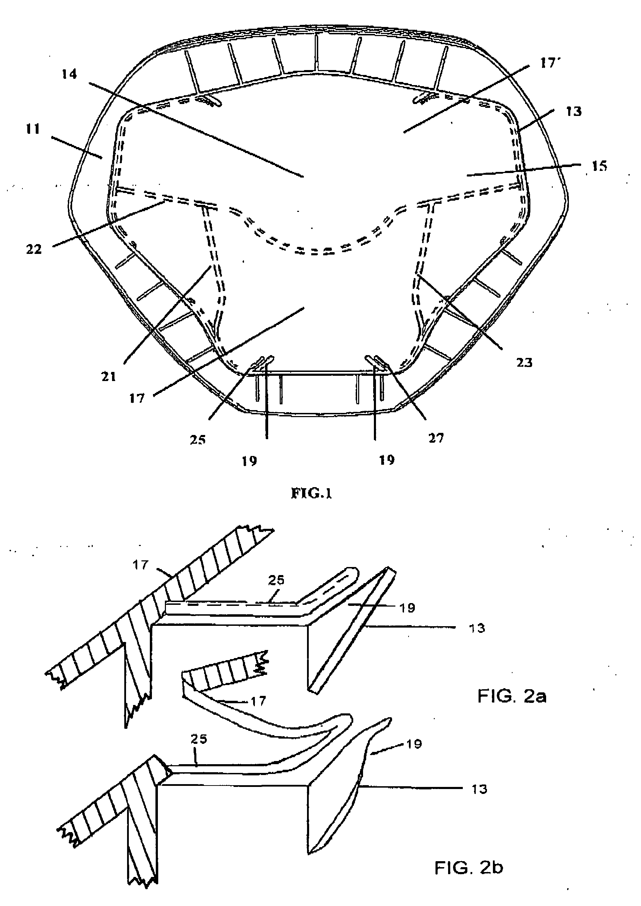

According to Figure 1, an airbag cover 11 formed by a container body 13 provided so as to be fixed to the airbag module and an upper surface 15 provided to be visible in the vehicle can be seen, in the central part of which a decorative element 14 is arranged which normally bears the logo of the automobile manufacturer.

The cover 11 is made of a plastic material, and preferably of a thermoplastic elastomer. These materials can be easily processed and allow suitable controlling the size and quality of the parts made using them.

As can be seen in this figure, the inner part of the upper surface 15 includes a plurality of tear lines 21, 22, 23 formed by weakened areas predetermined by the lines where the tearing of the upper surface 15 of the cover will occur during deployment of the cushion of the airbag, said tear lines 21, 22, 23 being designed so that a plurality of flaps 17, 17' is formed on the upper surface 15, allowing the release of the airbag.

Flap 17 in particular is defined by the tear lines 21, 22, 23 and once these lines are torn, it remains joined to the cover 11 in the area thereof defined between the ends of the two tear lines 21, 23 close to the container body 13, therefore having a hinge function when the airbag is deployed and causes the tear lines 21, 22, 23 to tear.

According to all the figures which show a preferred embodiment of the present invention, it can be seen that the main features thereof for achieving better control of the tear lines 21, 22, 23 than the control provided by the prior art are the presence of the angular reinforcement ribs 19 in the hinge area of the flap 17 and the curved shape of the ends of the tear lines 21, 23.

The angular ribs 19 are arranged to the side of the end parts 25, 27 of the tear lines 21, 23 and are arranged perpendicular to the upper surface 15 and oblique to the container body 13.

For their part, the ends of tear lines 21, 23 are designed with a curved shape with their end parts 25, 27 aimed towards the inside of said upper surface 15.

Each angular rib 19 and each end part 25, 27 of the tear lines 21, 23 are arranged in turn such that a hypothetical line tangential thereto at the end would be considerably parallel to the angular rib 19.

With these features it is achieved that the material of the flap 17 bends and elongates without tearing at the end parts 25, 27 of the tear lines 21, 23. Therefore the radius of gyration increases without reaching the elastic limit of the material, preventing detachments.

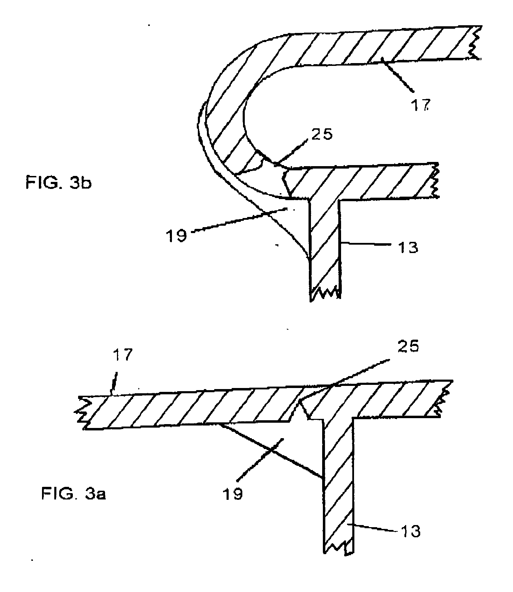

The triangular shaped ribs 19 with variable thickness prevent the detachment of the flap 17 at the end parts 25, 27 of the tear lines 21, 23 since they work under tension and torsion at the same time. The twisting of the ribs 19 (Figures 2b and 3b) resulting from working under torsion in particular entails a significant absorption of energy.

The reinforcement ribs 19 may have trapezoidal or curved shapes in addition to the triangular shape as a person skilled in the art will understand.

In addition, in another embodiment of the present invention, more than one reinforcement rib 18 can be used next to the end of each tear line.

Although one embodiment of the invention has been described and represented, it is evident that modifications comprised within the scope thereof can be introduced in the invention, and it is not limited to said embodiment but rather to the content of the following claims.

## Claims

1. An airbag cover (11) for automotive vehicles formed by a container body (13) provided so as to be fixed to an airbag module and an upper surface (15) made of a plastic material so as to be visible in the vehicle including a plurality of tear lines (21, 22, 23) on an inner face of said upper surface (15) formed by weakened areas defined by the tear lines (21, 22, 23) where its tearing will occur during deployment of a cushion of the airbag, said tear lines (21, 22, 23) being designed so as to form flaps (17, 17') after said deployment which remain joined to the cover (11) in the area thereof defined between the ends of two tear lines (21, 23) close to the container body (13), wherein
the cover (11) includes reinforcement ribs (19) to prevent the detachment of the flaps (17,17), where the reinforcement ribs (19) are arranged perpendicular to the upper surface (15), are located close to end parts (25, 27) of the tear lines (21, 23) and are joined both to the container body (13) and to the inner part of the upper surface (15) of the cover (11),
**characterized in that** said reinforcement ribs(19) are arranged oblique to the container body (13) and **in that** the ends of said tear lines (21, 23) are designed with a curved shape with its end parts (25, 27) aimed towards the inside of said upper surface (15).

2. An airbag cover (11) for automotive vehicles according to claim 1, **characterized in that** said reinforcement ribs (19) have any of the following shapes: triangular, trapezoidal and curved.

3. An airbag cover (11) for automotive vehicles according to claim 2, **characterized in that** said end parts (25, 27) are designed such that a hypothetical tangent line on its end forms an acute angle with the container body (13).

4. An airbag cover (11) for automotive vehicles according to claim 3, **characterized in that** said reinforcement ribs (19) are arranged in a plane parallel to said hypothetical tangent line.

5. An airbag cover (11) for automotive vehicles according to claim 2, **characterized in that** the cover includes more than one reinforcement rib (19) at the end of each tear line (21, 23).

6. An airbag cover (11) for automotive vehicles according to any of the previous claims, **characterized in that** the plastic material of the upper surface (15) is a thermoplastic elastomer.

## Patentansprüche

1. Airbag-Abdeckung (11) für Kraftfahrzeuge, die aus einem zur Anbringung an einem Airbag-Modul vorgesehenen Behälterkörper (13) und einer aus einem Kunststoff bestehenden Oberfläche (15) gebildet ist, damit sie in dem Fahrzeug sichtbar ist, mit mehreren Zerreißlinien (21, 22, 23) auf einer Innenfläche der Oberfläche (15), welche aus von den Zerreißlinien (21, 22, 23) festgelegten, geschwächten Bereichen gebildet ist, wobei deren Zerreißen während der Entfaltung eines Kissens des Airbags auftritt, wobei die Zerreißlinien (21, 22, 23) derart ausgelegt sind, dass sie nach dem Entfalten Klappen (17, 17') bilden, welche mit der Abdeckung (11) in dem Bereich derselben verbunden bleiben, der zwischen den Enden der beiden Zerreißlinien (21, 23) nahe des Behälterkörpers (13) festgelegt ist,
wobei
die Abdeckung (11) Verstärkungsrippen (19) aufweist, um das Ablösen der Klappen (17, 17') zu verhindern, wobei die Verstärkungsrippen (19) senkrecht zu der Oberfläche (15) angeordnet sind, in der Nähe der Endteile (25, 27) der Zerreißlinien (21, 23) liegen und sowohl mit dem Behälterkörper (13) als auch mit dem Innenteil der Oberfläche (15) der Abdeckung (11) verbunden sind, **dadurch gekennzeichnet, dass** die Verstärkungsrippen (19) schräg zu dem Behälterkörper (13) angeordnet sind und dass die Enden der Zerreißlinien (21, 23) mit einer gekrümmten Form ausgeführt sind, wobei deren Endteile (25, 27) auf die Innenseite der Oberfläche (15) gerichtet sind.

2. Airbag-Abdeckung (11) für Kraftfahrzeuge gemäß Anspruch 1, **dadurch gekennzeichnet, dass** die Verstärkungsrippen (19) eine der folgenden Formen aufweisen: dreieckig, trapezförmig und gekrümmt.

3. Airbag-Abdeckung (11) für Kraftfahrzeuge gemäß Anspruch 2, **dadurch gekennzeichnet, dass** die Endteile (25, 27) derart ausgeführt sind, dass eine hypothetische Tangente an ihrem Ende einen spitzen Winkel mit dem Behälterkörper (13) bildet.

4. Airbag-Abdeckung (11) für Kraftfahrzeuge gemäß Anspruch 3, **dadurch gekennzeichnet, dass** die Verstärkungsrippen (19) in einer Ebene parallel zu der hypothetischen Tangente angeordnet sind.

5. Airbag-Abdeckung (11) für Kraftfahrzeuge gemäß Anspruch 2, **dadurch gekennzeichnet, dass** die Abdeckung mehr als eine Verstärkungsrippe (19) am Ende jeder Zerreißlinie (21, 23) aufweist.

6. Airbag-Abdeckung (11) für Kraftfahrzeuge gemäß einem der vorhergehenden Ansprüche, **dadurch gekennzeichnet, dass** der Kunststoff der Oberfläche (15) aus einem thermoplastischen Elastomer besteht.

## Revendications

1. Un couvercle d'airbag (11) pour véhicules automobiles formé par un réceptacle (13) prévu de manière à être fixé à un module airbag et une surface supérieure (15) réalisée en un matériau plastique de manière à être visible dans le véhicule comprenant une pluralité des lignes de découpe (21, 22, 23) disposée sur une face interne de ladite surface supérieure (15) formée par les zones affaiblies définies par les lignes de découpe (21, 22, 23) où leur découpe se produira durant le déploiement d'un coussin airbag, lesdites lignes de découpe (21, 22, 23) étant conçues de manière à former des volets (17, 17') ') qui, après ledit déploiement, restent liés au couvercle (11) dans la zone de celui-ci définie entre les extrémités des deux lignes de découpe (21, 23) proches du réceptacle (13), dans lequel le couvercle (11) comprend des nervures de renfort (19) pour empêcher le détachement des volets (17, 17'), où les nervures de renfort (19) sont disposées perpendiculairement à la surface supérieure (15), sont situées à proximité des extrémités (25, 27) des lignes de découpe (21, 23) et sont reliées à la fois au réceptacle (13) et à la partie intérieure de la surface supérieure (15) du couvercle (11), **caractérisé en ce que** lesdites nervures de renfort (19) sont disposées obliquement sur le réceptacle (13) et **en ce que** les extrémités des dites lignes de découpe (21, 23) sont définies de forme courbe avec leurs extrémités (25, 27) dirigées vers l'intérieur de ladite surface supérieure (15).

2. Un couvercle d'airbag (11) pour véhicules automobiles selon la revendication 1, **caractérisé en ce que** les nervures de renfort (19) ont les formes suivantes: triangulaire, trapézoïdale, incurvée.

3. Un couvercle d'airbag (11) pour véhicules automobiles selon la revendication 2, **caractérisé en ce que** les extrémités (25, 27) sont définies de sorte qu'une hypothétique ligne tangentielle à ses extrémités forme un angle aigu avec le réceptacle (13).

4. Un couvercle d'airbag (11) pour véhicules automobiles selon la revendication 3, **caractérisé en ce que** les nervure de renfort (19) sont disposées dans un plan parallèle à la dite hypothétique ligne tangentielle.

5. Un couvercle d'airbag (11) pour véhicules automobiles selon la revendication 2, caractérisé en ce le couvercle inclut plus d'une nervure de renfort (19) à l'extrémité de chaque ligne de découpe (21, 23).

6. Un couvercle d'airbag (11) pour véhicules automobiles selon n'importe quelle des revendications précédentes, **caractérisé en ce que** le matériau plastique de la surface supérieure (15) est un élastomère thermoplastique.
